**Europäisches Patentamt**

**European Patent Office**

**Office européen des brevets**

(19)

(11) Veröffentlichungsnummer : **0 018 936**
**B1**

(12) **EUROPÄISCHE PATENTSCHRIFT**

(45) Veröffentlichungstag der Patentschrift :
21.03.84

(21) Anmeldenummer : 80730023.1

(22) Anmeldetag : 14.03.80

(51) Int. Cl.³ : **G 01 L 5/16, G 01 L 5/12, G 01 L 1/22**

(54) **Kraftmeßvorrichtung an Wälzlagern.**

(30) Priorität : 22.03.79 DE 2911479

(43) Veröffentlichungstag der Anmeldung :
12.11.80 Patentblatt 80/23

(45) Bekanntmachung des Hinweises auf die Patenterteilung : 21.03.84 Patentblatt 84/12

(84) Benannte Vertragsstaaten :
**AT CH FR GB IT SE**

(56) Entgegenhaltungen :
**DE-A- 2 746 937**
**FR-A- 2 125 926**
**SU-A- 172 533**
**US-A- 4 118 933**

(73) Patentinhaber : **Lechler, Gerhard, Dr.Ing.**
**Mühlenstrasse 58**
**D-1000 Berlin 46 (DE)**

(72) Erfinder : **Lechler, Gerhard, Dr.-Ing.**
**Mühlenstrasse 58**
**D-1000 Berlin 46 (DE)**
Erfinder : **Richter, Otto G., Dipl.-Ing.**
**Dieffenbachstrasse 33**
**D-1000 Berlin 61 (DE)**

(74) Vertreter : **Böning, Manfred, Dr. Ing. et al**
**Patentanwälte Dipl.-Ing. Dieter Jander Dr. Ing. Man-**
**fred Böning Kurfürstendamm 66**
**D-1000 Berlin 15 (DE)**

# 0 018 936

## Kraftmeßvorrichtung an Wälzlagern

Die Erfindung betrifft eine Einrichtung zum Messen von Kräften mit Hilfe einer zur Aufnahme von Radial- und Axialkräften geeigneten Wälzlageranordnung.

Derartige Einrichtungen eignen sich insbesondere zur automatischen Überwachung von Kräften in Werkzeug- und Arbeitsmaschinen. Sie erleichtern die Einführung automatischer Fertigungssysteme und bieten Möglichkeiten zur Erhöhung der Genauigkeit der Maschinen.

In der am 17.10.77 angemeldeten und am 19.4.79 veröffentlichten Anmeldung gemäß DE-A-27 46 937 ist bereits eine Einrichtung der in Betracht gezogenen Art mit einem vorderen und einem hinteren Kegelrollenlager vorgeschlagen worden, von denen das vordere mit zwei und das hintere mit einer Meßstelle ausgerüstet ist. Mit dem genannten Lager können entweder jeweils radiale oder jeweils axiale Kräfte gemessen werden. Es hat sich jedoch gezeigt, daß eine gleichzeitige Messung von Radial- und Axialkräften bzw. Radial- und Axialkraftkomponenten nicht möglich ist. Der Grund hierfür besteht darin, daß Radialkräfte regelmässig axiale Scheinkräfte hervorrufen. Ursache für die Entstehung derartiger axialer Scheinkräfte ist der unterschiedliche Traganteil, der auf die im Abstand voneinander angeordneten Wälzkörperreihen entfällt.

Der Erfindung liegt die Aufgabe zugrunde, eine Einrichtung der in Betracht gezogenen Art zu schaffen, mit der gleichzeitig radiale und axiale Kräfte, d. h. auch schräg wirkende Kräfte mit radialen und axialen Komponenten gemessen werden können, ohne daß störende Scheinkräfte auftreten.

Vom Erfinder werden zwei Lösungen der vorstehenden Aufgabe vorgeschlagen, die in Anspruch 1 bzw. in Anspruch 2 definiert sind.

Beide erfindungsgemässen Einrichtungen bieten den Vorteil, daß mit ihnen gleichzeitig Radial- und Axialkräfte bzw. Radialkraft- und Axialkraftkomponenten gemessen werden können, ohne daß das Meßergebnis durch Scheinkräfte der eingangs geschilderten Art verfälscht wird.

Die Erfindung wird im folgenden anhand mehrerer in der beigefügten Zeichnung dargestellter Ausführungsbeispiele näher erläutert. Es zeigen :

Figur 1  teilweise im Schnitt einen als zweireihiges Schrägkugellager ausgebildeten mit drei Meßstellen versehenen Geber,

Figur 2  im vergrößerten Maßstab die Draufsicht auf eine Meßstelle des Gebers gemäß Figur 1,

Figur 3  das Blockschaltbild des elektrischen Teils einer mit einem Geber nach Figur 1 ausgerüsteten Einrichtung,

Figur 4  teilweise im Schnitt einen als zweireihiges Schrägkugellager ausgebildeten mit vier Meßstellen versehenen Geber,

Figur 5  das Blockschaltbild des elektrischen Teils einer mit einem Geber nach Figur 4 ausgerüsteten Einrichtung,

Figur 6  teilweise im Schnitt einen aus zwei Schrägkugellagern bestehenden Geber mit vier Meßstellen,

Figur 7  einen Schnitt durch einen aus zwei Kegelrollenlagern bestehenden Geber mit vier Meßstellen und

Figur 8  einen Schnitt durch das vordere Schrägkugellager eines aus zwei Schrägkugellagern bestehenden Gebers.

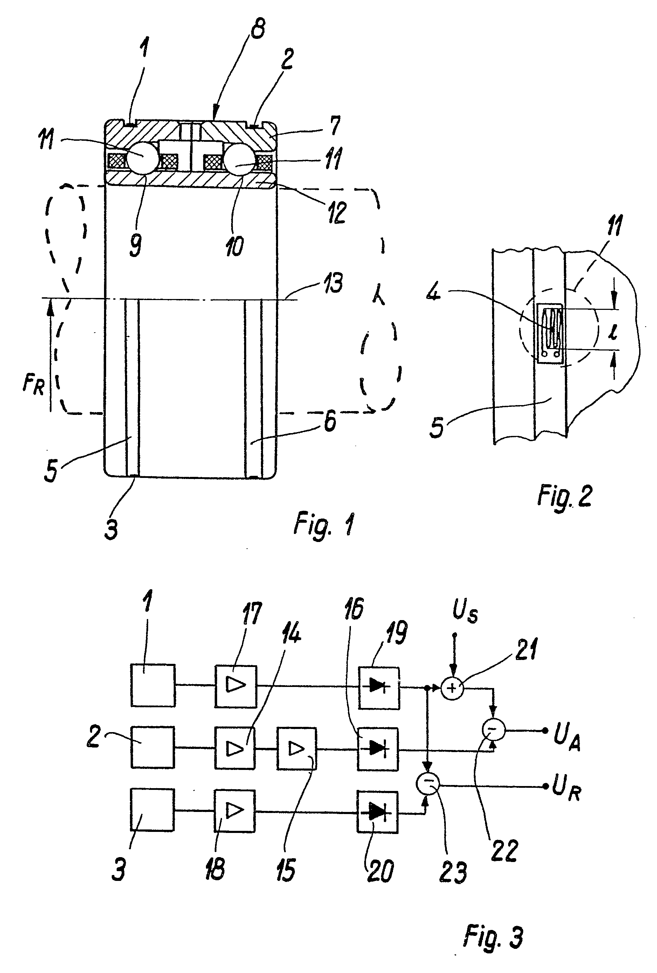

Der in Figur 1 dargestellte Geber besitzt drei Meßstellen 1, 2 und 3, an denen jeweils ein Dehnungsmeßstreifen 4 angeordnet ist (vgl. Figur 2). Jeder Dehnungsmeßstreifen 4 ist in eine Nut 5 bzw. 6 an der Außenseite des Außenringes 7 eines zweireihigen Schrägkugellagers 8 mit zwei Reihen 9 und 10 von Wälzkörpern 11 und einem Innenring 12 eingeklebt. Die Länge 1 des Gitters eines jeden Dehnungsmeßstreifens 4 ist, wie in Figur 2 angedeutet, kleiner als der Durchmesser des Wälzkörper 11. Die besten Ergebnisse erhält man, wenn die Differenz in der Grössenordnung von 10 bis 30 % liegt. Es ist möglich, jede Meßstelle nicht nur mit einem sondern mit mehreren, insbesondere zwei Dehnungsmeßstreifen auszustatten. Sämtliche Meßstellen 1, 2 und 3 sollten zusammen mit der Längsachse 13 des Schrägkugellagers 8 in einer Ebene liegen, die mit der Wirkebene der Radialkraft $F_R$ zusammenfällt.

Bei beispielsweise in eine Spindelbohrung eingebautem Geber wird die über die Spindel auf den Innenring 12 übertragene Radialkraft $F_R$ die ihr nähergelegene Wälzkörperreihe 9 stärker belasten als die ihr ferner gelegene Wälzkörperreihe 10. Die Folge ist, dass bei Belastung des Gebers ungleiche Spannungsänderungen $\Delta U_1$ und $\Delta U_2$ an den Meßstellen 1 und 2 auftreten. Unterschiedliche Spannungsänderungen an den Meßstellen 1 und 2 fallen jedoch auch bei Einwirkung von Axialkräften $F_A$ auf den Geber an. Die unterschiedlichen Traganteile der Wälzkörperreihen 9 und 10 bei reiner Radialkraftbelastung würden mithin bei gleichzeitiger Axialkraftmessung zur Anzeige einer axialen Scheinkraft führen. Um dies zu verhindern, werden die unter Belastung auftretenden Spannungsänderungen an den Meßstellen 1 und 2 unterschiedlich verstärkt, und zwar mit Hilfe eines dem Verstärker 14 für die Meßstelle 2 nachgeschalteten Kompensationsverstärkers 15, von dem das Signal der Meßstelle 2 zu einem Gleichrichter 16 gelangt. Die Verstärker 17 und 18 für die Meßstellen 1 und 3 sind demgegenüber direkt mit Gleichrichtern 19 und 20 verbunden.

Trägt man den unterschiedlichen Traganteilen der Wälzkörperreihen 9 und 10 durch Multiplikatoren für die Radialkraft Rechnung und ordnet man der Wälzkörperreihe 9 einen Multiplikator $(1 - f)$ und der Wälzkörperreihe 10 einen Multiplikator f zu, so erhält man an der Meßstelle 1 Spannungsänderungen

$$\Delta U_1 = \Delta U_R (1 - f) \tag{1}$$

und an der Meßstelle 2 Spannungsänderungen

$$\Delta U_2 = \Delta U_R f, \tag{2}$$

wobei f kleiner als 1 und $\Delta U_R$ eine Spannungsänderung ist, die sich bei gleichen Traganteilen unter Radialkrafteinwirkung einstellen würde. Die Spannungsänderungen müssen so verstärkt werden, daß ihre Differenz $\Delta U'_1 - \Delta U'_2$ an den Ausgängen der Gleichrichter 16 und 19 Null wird. Es muß mithin folgende Beziehung erfüllt sein :

$$\Delta U'_1 - \Delta U'_2 = 0 = V_1 \Delta U_R (1 - f) - V_2 \cdot \Delta U_R f \tag{3}$$

wobei $V_1$ und $V_2$ die Verstärkungsfaktoren sind. Löst man die Gleichung (3) nach $V_2$ auf, so wird

$$V_2 = V_1(1 - f/f) \tag{4}$$

Wird durch den Verstärker 14 und den Kompensationsverstärker 15 eine dem Verstärkungsfaktor $V_2$ entsprechende Verstärkung bewirkt, so werden die unterschiedlichen Traganteile der Wälzkörperreihen 9 und 10 ausgeglichen und eine Spannungsdifferenz zwischen den Meßstellen 1 und 2 entsteht erst dann, wenn der Geber tatsächlich mit einer Axialkraft $F_A$ belastet wird.

Durch eine Kompensation ist dafür gesorgt, daß auch die im Leerlauf auftretenden unterschiedlichen Ausgangsspannungen $U_{01}$ und $U_{02}$ der Meßstellen 1 und 2 ausgeglichen werden. Diese unterschiedlichen Ausgangsspannungen entstehen dadurch, daß die durch die unabdingbare Lagervorspannung hervorgerufene Spannung $U_0$, wie die durch äußere Kräfte hervorgerufenen Spannungsänderungen $\Delta U$ unterschiedlich verstärkt werden, und zwar sind die verstärkten und gleichgerichteten Spannungen

$$U'_{01} = V_1 \cdot U_0 \tag{5}$$

und

$$U'_{02} = V_1(1 - f/f)U_0 \tag{6}$$

Zum Ausgleich der Differenz zwischen $U'_{01}$ und $U'_{02}$ dient eine Korrekturspannung $U_s$, deren Grösse sich wie folgt ermitteln läßt :

$$U'_{01} - U'_{02} = 0 = V_1 U_0 - V_1(1 - f/f)U_0 + U_s \tag{7}$$

$$U_s = V_1 U_0(1 - 2f/f) \tag{8}$$

Diese Korrekturspannung $U_s$ wird zu der von der Meßstelle 1 stammenden durch den Verstärker 17 weniger als die von der Meßstelle 2 gelieferte Spannung verstärkten und gleichgerichteten Spannung $U'_{01} + \Delta U'_1$ mit Hilfe eines Addierers 21 addiert.

Bei Belastung des Schrägkugellagers 8 durch eine Radialkraft $F_R$ werden einem Subtrahierer 22 von den Meßstellen 1 und 2 herrührende Spannungen

$$U'_1 = U'_{01} + \Delta U'_1 + U_s \tag{9}$$

und

$$U'_2 = U'_{02} + \Delta U'_2 \tag{10}$$

zugeführt, wobei $U'_{01}$ und $U'_{02}$ die im Leerlauf auftretenden von den Meßstellen 1 und 2 herrührenden verstärkten und gleichgerichteten Spannungen sind und $\Delta U'_1$ und $\Delta U'_2$ die von den gleichen Meßstellen stammenden ebenfalls verstärkten und gleichgerichteten von der Radialkraft $F_R$ abhängigen Spannungsänderungen. Der Subtrahierer 22 liefert ein Differenzsignal $U_A$, welches einer auf das Schrägkugellager 8 einwirkenden Axialkraft $F_A$ entspricht. Daß dieses Differenzsignal $U_A$ nur dann von Null verschieden ist, wenn tatsächlich eine Axialkraft $F_A$ auf das Lager einwirkt, macht die folgende Ableitung deutlich :

$$U'_1 - U'_2 = (U'_{01} + U_s + \Delta U'_1) - (U'_{02} + \Delta U'_2) \tag{11}$$

$$= (V_1 U_0 + V_1 U_0(1 - 2f/f) + V_1 \Delta U_R(1 - f) - (V_1(1 - f/f)U_0 + V_1(1 - f/f)\Delta U_R f)$$

$$= V_1 U_0(1 + (1 - 2f/f) - (1 - f/f) + V_1 \Delta U_R((1 - f) - (1 - f/f) \cdot f)$$

$$=V_1U_0((f + 1 - 2f - 1 + f)/f) + V_1\Delta U_R((1 - f) - (1 - f)) = 0 \qquad (12)$$

Das der Radialkraft $F_R$ entsprechende Differenzsignal $U_R$ liefert ein Subtrahierer 23, dem die von den Meßstellen 1 und 3 stammenden verstärkten und gleichgerichteten Spannungen zugeführt werden.

Die vorstehend erörterte Meßeinrichtung arbeitet nicht so genau wie die anschliessend beschriebene zweite Meßeinrichtung. Der Grund für die begrenzte Genauigkeit liegt darin, daß insbesondere thermische Einflüsse die inneren Lagerkräfte und die diesen proportionale Spannung $U_0$ ändern können. Der Ausgleich mit einer konstanten Korrekturspannung funktioniert dann wegen der unterschiedlichen Verstärkung der Spannung $U_{01}$ und $U_{02}$ nicht mehr.

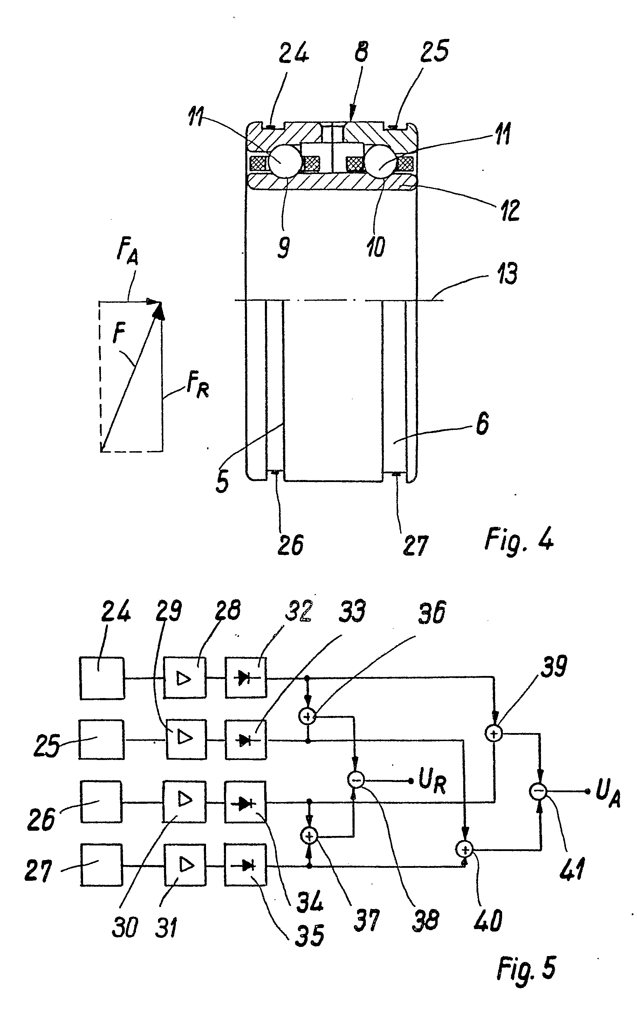

Die in den Figuren 4 und 5 beschriebene Kraftmeßeinrichtung besitzt vier Meßstellen 24, 25, 26 und 27, deren Aufbau dem Aufbau der Meßstellen 1, 2 und 3 entspricht. Die vier Meßstellen 24, 25, 26 und 27 liegen zusammen mit der Längsachse 13 des auch hier als Geber verwendeten Schrägkugellagers 8 in einer Ebene, die mit der gezeichneten Schnittebene zusammenfällt und in der eine Kraft F wirkt, die in eine axiale Komponente $F_A$ und eine radiale Komponente $F_R$ zerlegt werden kann.

Die Signale von den vier Meßstellen werden durch Verstärker 28, 29, 30 und 31 verstärkt und anschliessend durch Gleichrichter 32, 33, 34 und 35 gleichgerichtet. Im unbelasteten Zustand des Schrägkugellagers 8, d. h. im Leerlauf, liegt am Ausgang aller Gleichrichter die gleiche Spannung $U'_0$ an, die von der erforderlichen Vorspannung des Lagers herrührt, d. h. $U'_{024}$, $U'_{025}$, $U'_{026}$ und $U'_{027}$ sind alle gleich $U'_0$.

Durch die axiale Komponente $F_A$ und die radiale Komponente $F_R$ der Kraft F werden Spannungsänderungen $\Delta U_{24}$, $\Delta U_{25}$, $\Delta U_{26}$ und $\Delta U_{27}$ an den Meßstellen 24, 25, 26 und 27 erzeugt.

Zur Ermittlung eines der radialen Kraftkomponente $F_R$ proportionalen Signales $U_R$ werden die von den Meßstellen 24 und 25 stammenden verstärkten und gleichgerichteten Signale $U'_{24}$ und $U'_{25}$ in einem Addierer 36 und die von den Meßstellen 26 und 27 stammenden verstärkten und gleichgerichteten Signale $U'_{26}$ und $U'_{27}$ in einem Addierer 37 addiert. Die gewonnenen Summensignale $(U'_{24} + U'_{25})$ bzw. $(U'_{26} + U'_{27})$ werden anschliessend in einem Subtrahierer 38 zwecks Ermittlung des der radialen Kraftkomponente $F_R$ entsprechenden Signals $U_R$ voneinander subtrahiert.

$$U_R = (U'_{24} + U'_{25}) - (U'_{26} + U'_{27}) \qquad (13)$$

Zur Erzeugung eines der axialen Kraftkomponente $F_A$ proportionalen Signals $U_A$ werden die von den Meßstellen 24 und 26 stammenden verstärkten und gleichgerichteten Signale $U'_{24}$ und $U'_{26}$ in einem Addierer 39 und die von den Meßstellen 25 und 27 stammenden verstärkten und gleichgerichteten Signale $U'_{25}$ und $U'_{27}$ in einem Addierer 40 addiert. Das gewonnene Summensignal $(U'_{24} + U'_{26})$ wird anschliessend in einem Subtrahierer 41 vom Summensignal $(U'_{25} + U'_{27})$ abgezogen. Die Differenz ist das Signal $U_A$.

$$U_A = (U'_{24} + U'_{26}) - (U'_{25} + U'_{27}) \qquad (14)$$

Die Spannung $U_{24}$ bei Belastung des Schrägkugellagers 8 mit der Kraft F setzt sich aus drei Anteilen zusammen, und zwar aus der der Vorspannung des Lagers entsprechenden Spannung $U_{024}$, einer durch die radiale Kraftkomponente $F_R$ erzeugten Spannung $\Delta U_{24R}$ und einer durch die axiale Kraftkomponente erzeugten Spannung $\Delta U_{24A}$.

Entsprechendes gilt für die Spannungen $U_{25}$, $U_{26}$ und $U_{27}$, wobei die durch die Kraftkomponente $F_R$ erzeugten Spannungen $\Delta U_{24R}$ sowie $\Delta U_{25R}$ positiv und $\Delta U_{26R}$ und $\Delta U_{27R}$ negativ sind, während die durch die Kraftkomponente $F_A$ erzeugten Spannungen $\Delta U_{25A}$ und $\Delta U_{27A}$ positiv und $\Delta U_{24A}$ und $\Delta U_{26A}$ negativ sind.

Unter Umformung der Gleichung (13) erhält man somit für $U_R$

$$U_R = [(U'_0 + \Delta U'_{24R} - \Delta U'_{24A}) + (U'_0 + \Delta U'_{25R} + \Delta U'_{25A})] - [(U'_0 - \Delta U'_{26R} - \Delta U'_{26A}) + (U'_0 - \Delta U'_{27R} + \Delta U'_{27A})] \qquad (15)$$

Berücksichtigt man die unterschiedlichen Traganteile der Wälzlagerreihen 9 und 10 wie im ersten Ausführungsbeispiel durch die Multiplikatoren $(1 - f)$ und f, so werden

$$\Delta U'_{24R} = \Delta U'_R(1 - f) \qquad (16)$$

$$\Delta U'_{25R} = \Delta U'_R f \qquad (17)$$

$$\Delta U'_{26R} = \Delta U'_R(1 - f) \qquad (18)$$

$$\Delta U'_{27R} = \Delta U'_R(f) \qquad (19)$$

Man erhält dann :

$$U_R = [(U'_0 + \Delta U'_R(1 - f) - \Delta U'_{24A}) + (U'_0 + \Delta U'_R f + \Delta U'_{25A})] -$$
$$[(U'_0 - \Delta U'_R(1 - f) - \Delta U'_{26A}) + (U'_0 - \Delta U'_R(f) + \Delta U'_{27A})] \qquad (20)$$

Da unter dem Einfluß der axialen Kraftkomponente $F_A$ die Meßstellen 25 und 27 um jeweils gleiche Beträge belastet werden wie die Meßstellen 24 und 26 entlastet werden, gilt

$$[\Delta U'_{25A}] = [\Delta U'_{27A}] = [\Delta U'_{24A}] = [\Delta U'_{26A}] \qquad (21)$$

und es wird

$$U_R = 2\Delta U'_R. \qquad (22)$$

Entsprechend läßt sich Gleichung (14) wie folgt umformen :

$$U_A = [(U'_0 + \Delta U'_{24R} - \Delta U'_{24A}) + (U'_0 - \Delta U'_{26R} - \Delta U'_{26A})] -$$
$$[(U'_0 + \Delta U'_{25R} + \Delta U'_{25A}) + (U'_0 - \Delta U'_{27R} + \Delta U'_{27A})] \qquad (23)$$

Unter Berücksichtigung der Gleichungen (14) bis (19) und (21) wird

$$U_A = - 4\Delta U'_{24A}. \qquad (24)$$

Die Gleichungen (22) und (24) zeigen, daß die Ausgangssignale $U_R$ und $U_A$ nur von der radialen Kraftkomponente $F_R$ bzw. der axialen kraftkomponente $F_A$ abhängen.

Die mit vier Meßstellen ausgestattete Meßeinrichtung bietet den Vorteil, daß alle vier Meßsignale in gleicher Weise verstärkt werden. Dadurch werden der Abgleich und die Eichung erleichtert und thermisch bedingte Änderungen der Vorspannung des Lagers wirken sich nicht auf die Ausgangssignale $U_R$ und $U_A$ aus, es entsteht mit anderen Worten keine Nullpunkts-Verschiebung der Kraftanzeige.

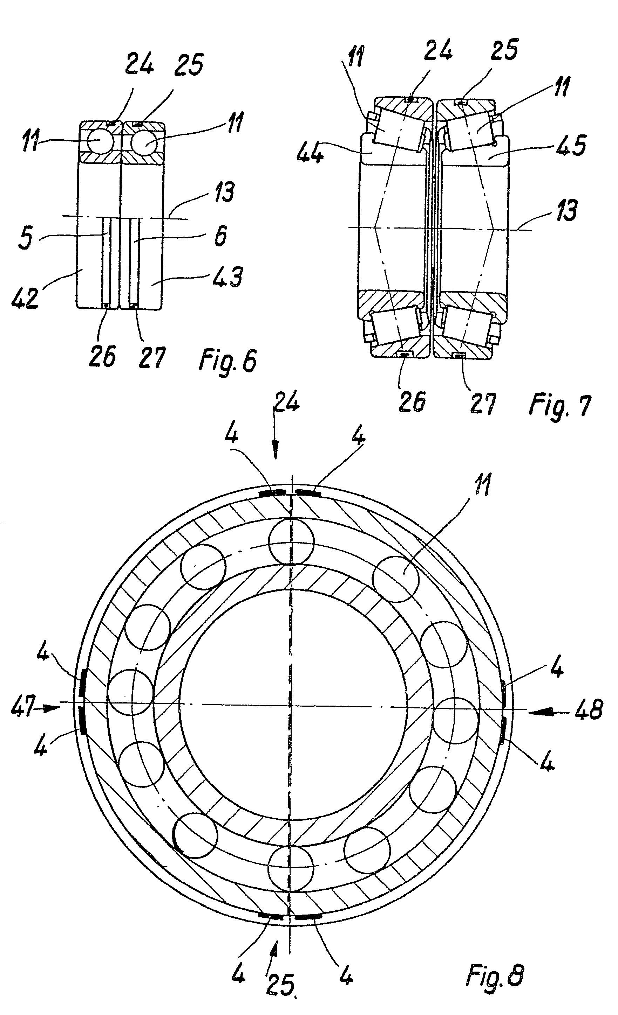

Figur 6 zeigt einen Geber für eine Kraftmeßeinrichtung, der aus zwei Schrägkugellagern 42 und 43 besteht, im übrigen aber in seinem Aufbau dem Geber gemäß Figur 4 weitgehend entspricht und folglich keiner näheren Erläuterung bedarf. Entsprechendes gilt für den in Figur 7 dargestellten aus zwei Kegelrollenlagern 44 und 45 bestehenden Geber.

Figur 8 zeigt einen Schnitt durch das vordere Schrägkugellager 46 eines dem in Figur 6 dargestellten Geber entsprechenden Gebers. In diesem Falle sind an allen Meßstellen jeweils zwei Dehnungsmeßstreifen 4 angeordnet und zusätzlich zu den Meßstellen 24, 25, 26 und 27 (vgl. Figur 6) noch Meßstellen 47 und 48 vorgesehen, die sich in einer senkrecht zur Ebene der übrigen Meßstellen angeordneten Ebene gegenüberliegen.

Die Meßstellen 47 und 48 können in gleicher Weise geschaltet werden wie z. B. die Meßstellen 1 und 3 des ersten Ausführungsbeispiels. Mit Hilfe der Meßstellen 47 und 48 lassen sich auch Radialkräfte erfassen, die senkrecht zu den bisher behandelten Radialkräften wirken. Ein gemäß Figur 8 modifiziertes Lager nach Figur 6 könnte man beispielsweise für eine Meßeinrichtung in einem Bearbeitungszentrum verwenden, während ein Lager nach Figur 6 beispielsweise für eine Meßeinrichtung in einer Gewindeschleifmaschine durchaus ausreichend wäre.

### Ansprüche

1. Einrichtung zum Messen von Kräften mit Hilfe einer zur Aufnahme von Radial- und Axialkräften geeigneten Wälzlageranordnung (8), deren Außen- und/oder Innenringe mit an verschiedenen Meßstellen (1, 2, 3) angeordneten Dehnungsmeßstreifen (4) versehen sind, die zum Erfassen der Überrolldehnungen dienen, wobei die Meßstellen (1, 2, 3) an solchen Stellen der Außen- und/oder Innenringe angeordnet sind, an denen sich bei Belastung der Wälzlageranordnung (8) die zu erfassenden Überrolldehnungen unterschiedlich ändern und mit einer Auswerteschaltung (16-23), mit der die aus den unterschiedlichen Überrolldehnungen resultierenden Widerstandsänderungen der Dehnungsmeßstreifen (4) einzeln erfaßt, einzeln verstärkt und einzeln gleichgerichtet und mit der durch Subtraktion aus den unterschiedlichen Widerstandsänderungen gewonnener gleichgerichteter Signale den genannten Kraftkomponenten proportionale Signale gewonnen werden, dadurch gekennzeichnet, daß die Wälzlageranordnung (8) zwei Wälzkörperreihen (9, 10) aufweist, daß drei Meßstellen (1, 2, 3) vorgesehen sind, von denen zwei (1, 3) der ersten (9) und eine (2) der zweiten Wälzkörperreihe (10) derart zugeordnet sind, daß eine Meßstelle (1) der ersten Wälzkörperreihe (9) und die Meßstelle (2) der zweiten Wälzkörperreihe (10) von einer Radialkraft im gleichen Sinne beaufschlagt sind, daß die Auswerteschaltung (16-23) zwecks Ermittlung der Radialkraft Einrichtungen (23) zur Subtraktion der von den beiden Meßstellen (1,3) der ersten Wälzkörperreihe (9) stammenden Signale und zwecks Ermittlung der Axialkraft Einrichtungen (22) zur Subtraktion der von der einen Meßstelle (1) der ersten Wälzkörperreihe (9) und der Meßstelle (2) der zweiten Wälzkörperreihe (10) stammenden Signale aufweist, und daß eine Kompensationseinrichtung (15) vorgesehen ist, die die bei reinen Radialkräften auf die beiden Wälzkörperreihen (9, 10) entfallenden unterschiedlichen Traganteile und hieraus resultierende axiale Scheinkräfte dadurch ausgleicht bzw.

eliminiert, daß sie das schwächere Signal der durch die Radialkraft im gleichen Sinne beaufschlagten Meßstellen (1, 2) auf der ersten und der zweiten Wälzkörperreihe (9, 10) bis zum Verschwinden der jeweiligen Scheinkraft verstärkt.

2. Einrichtung zum Messen von Kräften mit Hilfe einer zur Aufnahme von Radial- und Axialkräften geeigneten wälzlageranordnung (8) deren Außen- und/oder Innenringe mit an verschiedenen Meßstellen (24, 26 ; 25, 27) angeordneten Dehnungsmeßstreifen (4) versehen sind, die zum Erfassen der Überrolldehnungen dienen, wobei die Meßstellen (24, 26 ; 25, 27) an solchen Stellen der Außen- und/oder Innenringe angeordnet sind, an denen sich bei Belastung der Wälzlageranordnung (8) die zu erfassenden Überrolldehnungen unterschiedlich ändern, und mit einer Auswerteschaltung (24-41) mit der die aus den unterschiedlichen Überrolldehnungen resultierenden Widerstandsänderungen der Dehnungsmeßstreifen (4) einzeln erfaßt, einzeln verstärkt und einzeln gleichgerichtet und mit der durch Subtraktion aus den unterschiedlichen Widerstandsänderungen gewonnener gleichgerichteter Signale den genannten Kraftkomponenten proportionale Signale gewonnen werden, dadurch gekennzeichnet, daß die Wälzlageranordnung (8) zwei Wälzkörperreihen (9, 10) aufweist, daß vier Meßstellen (24, 26 ; 25, 27) vorgesehen sind, die sich paarweise gegenüberliegend auf der ersten und der zweiten Wälzkörperreihe (9 bzw. 10) angeordnet sind, und daß die Auswerteschaltung (24-41) für jede Kraftkomponente Einrichtungen (36-41) zur Subtraktion der Summe der Meßwerte der beiden Meßstellen, die durch die zu messende Komponente jeweils entlastet werden, von der Summe der Meßwerte der beiden Meßstellen, die jeweils belastet werden, aufweist.

3. Einrichtung nach Anspruch 1, dadurch gekennzeichnet, daß sie mit einem Addierer (21) für eine Korrekturspannung ($U_s$) versehen ist, die dem von der am stärksten belasteten Meßstelle (1) gelieferten gleichgerichteten Signal hinzugefügt wird.

4. Einrichtung nach einem der Ansprüche 1 bis 3, dadurch gekennzeichnet, daß sämtliche Meßstellen (1, 2, 3 bzw. 24-27) und die Längsachse (13) des Wälzlagers (8) im wesentlichen in einer Ebene liegen.

5. Einrichtung nach einem der Ansprüche 1 bis 4, dadurch gekennzeichnet, daß die Länge (1) der Gitter der an den Meßstellen angeordneten Dehnungsmeßstreifen (4) höchstens gleich der Länge der Projektionen der Wälzkörper (11) auf die Meßstelle ist.

6. Einrichtung nach einem der Ansprüche 4 oder 5, dadurch gekennzeichnet, daß zusätzlich zu den in einer Ebene liegenden drei bzw. vier Meßstellen (24-27) zwei weitere Meßstellen (47, 48) vorhanden sind, die sich in einer senkrecht zur Ebene der übrigen Meßstellen angeordneten Ebene gegenüberliegen und der ersten Wälzkörperreihe zugeordnet sind.

7. Einrichtung nach Anspruch 6, dadurch gekennzeichnet, daß die Wälzlageranordnung entweder aus einem zweireihigen Wälzlager oder aus zwei hintereinander angeordneten einreihigen Wälzlagern besteht und daß der vorderen Wälzkörperreihe des zweireihigen Lagers bzw. dem vorderen Wälzlager der beiden hintereinandergeschalteten Lager vier Meßstellen (24, 26, 47, 48) zugeordnet sind.

**Claims**

1. Device for measuring forces by means of a rolling bearing arrangement (8) suitable for accepting radial and axial forces, the outer and/or inner rings of which rolling bearing arrangement are equipped with strain gauges (4) Located at various measuring points (1, 2, 3), which strain gauges are used for sensing the rolling extensions, the measuring points (1, 2, 3) being located at positions on the outer and/or inner rings such that when the rolling bearing arrangement (8) is loaded the rolling extensions to be sensed at these positions alter differentially and having an analysis circuit (16-23), by means of which the resistance changes in the strain gauges (4) resulting from the differential rolling extensions are individually sensed, individually amplified and individually rectified and by means of which analysis circuit (16-23) the signals proportional to the force components mentioned are obtained by subtraction of the rectified signals obtained from the differential resistance changes, characterised in that the rolling bearing arrangement (8) has two rows of roller bodies (9, 10), that three measuring points (1, 2, 3) are provided, of which two (1, 3) are allocated to the first (9) and one (2) to the second row of rolling bodies (10) in such a way that one measuring point (1) of the first row of rolling bodies (9) and the measuring point (2) of the second row of rolling bodies (10) are subjected to a radial force in the same direction, that the analysis circuit (16-23), for the purpose of determining the radial force, has devices (23) for subtraction of the signals originating from the two measuring points (1, 3) of the first row of rolling bodies (9) and, for the purpose of determining the axial force, devices (22) for subtraction of the signals originating from one of the measuring points (1) of the first row of rolling bodies (9) and the measuring point (2) of the second row of rolling bodies (10) and that a compensation device (15) is provided, which compensation device compensates for or eliminates, as the case may be, the different support contributions and consequently resulting apparent axial forces devolving on the two rows of rolling bodies (9, 10) under purely radial force conditions, this compensation or elimination occurring in such a manner that the compensation device (15) amplifies the weaker signal from the measuring points (1, 2) on the first and the second rows of rolling bodies (9, 10) subjected to the radial force in the same direction, until the currently occurring apparent force disappears.

2. Device for measuring forces by means of a rolling bearing arrangement (8) suitable for accepting radial and axial forces, the outer and/or inner rings of which rolling bearing arrangement are equipped with strain gauges (4) located at various measuring points (24, 26 ; 25, 27), which strain gauges are used for sensing the rolling extensions, the measuring points (24, 26 ; 25, 27) being located at positions on the outer and/or inner rings such that when the rolling bearing arrangement (8) is loaded the rolling extensions to be sensed at these positions alter differentially and having an analysis circuit (24-41), by means of which the resistance changes in the strain gauges (4) resulting from the differential rolling extensions are individually received, individually amplified and individually rectified and by means of which analysis circuit (24-41) the signals proportional to the force components mentioned are obtained by subtraction of the rectified signals obtained from the differential resistance changes, characterised in that the rolling bearing arrangement (8) has two rows of rolling bodies (9, 10) that four measuring points (24, 26 ; 25, 27) are provided, which measuring points are located in pairs opposite to one another on the first and the second row of rolling bodies (9 and 10) and that the analysis circuit (24-41) for each force component has devices (36-41) for subtraction of the sum of the measured values of the two measuring points which are not currently loaded by the component to be measured from the sum of the measured values of the two measuring points which are currently loaded.

3. Device according to Claim 1, characterised in that it is equipped with an adder (21) for a correction voltage ($U_s$), which is added to the rectified signal supplied by the most heavily loaded measuring point (1).

4. Device according to one of Claims 1 to 3, characterised in that all the measuring points (1, 2, 3 and 24-27) and the longitudinal axis (13) of the rolling bearing (8) lie substantially in one plane.

5. Device according to one of Claims 1 to 4, characterised in that the length (l) of the grid of the strain gauges (4) located at the measuring points is at most equal to the length of the projections of the rolling bodies (11) onto the measuring point.

6. Device according to either of Claims 4 or 5, characterised in that in addition to the three or four measuring points (24-27) lying in one plane, two further measuring points (47, 48) are present, which measuring points (47, 48) are opposite to one another in a plane located at right angles to the plane of the other measuring points and are allocated to the first row of rolling bodies.

7. Device according to Claim 6, characterised in that the rolling bearing arrangement consists either of a two-row rolling bearing or of two single-row rolling bearings located in series and that four measuring points (24, 26, 47, 48) are allocated to the front row of rolling bodies of the two-row bearing or to the front rolling bearing of the two bearings placed in series.

## Revendications

1. Dispositif de mesure de forces à l'aide d'un montage à roulement(s) (8) capable d'absorber des forces radiales et des forces axiales, et dont les bagues extérieures ou les bagues intérieures, ou les deux, sont pourvues de jauges d'allongement (4) placées en différents points de mesure (1,2,3) et servant à détecter les allongements au passage des éléments de roulement, les points de mesure (1,2,3) étant placés à des endroits des bagues extérieures ou intérieures, ou les deux, où, quand le montage (8) à roulement(s) est chargé, les allongements au passage des éléments de roulement, que l'on peut détecter, varient de façons différentes, avec un circuit d'interprétation (16-23) qui saisit, amplifie et redresse individuellement les variations de résistance des jauges d'allongement (4) résultant des différents allongements au passage des éléments de roulement, et avec lequel on obtient, par soustraction de signaux redressés obtenus à partir des différentes variations de résistance, des signaux proportionnels aux composantes de force mentionnées, caractérisés en ce que le montage à roulement(s) (8) possède deux rangées d'éléments de roulement (9, 10), en ce qu'il y a trois points de mesure (1, 2, 3) dont deux (1, 3) correspondent de telle façon à la première rangée d'éléments de roulement (9) et l'un (2) correspond à la deuxième rangée (10), de telle façon qu'un point de mesure (1) de la première rangée (9) et le point de mesure (2) de la deuxième rangée (10) reçoivent une force radiale dans le même sens, en ce que le circuit d'interprétation (16-23) possède, pour déterminer la force radiale, des dispositifs (23) de soustraction des signaux provenant des deux points de mesure (1, 3) de la première rangée (9) d'éléments de roulement et, pour la détermination de la force axiale, des dispositifs (22) de soustraction des signaux provenant de l'un des points de mesure (1) de la première rangée (9) d'éléments de roulement et du point de mesure (2) de la deuxième rangée (10), et en ce qu'il y a un dispositif de compensation (15) qui compense ou élimine les différences de répartition de la charge entre les deux rangées (9, 10), qui se produisent avec des forces purement radiales, et les forces apparentes axiales qui en résultent, du fait qu'il amplifie, jusqu'à la disparition de la force apparente correspondante, le signal le plus faible des points de mesure (1, 2) subissant la force radiale dans le même sens, points de mesure situés sur la première et sur la deuxième rangée (9, 10) d'éléments de roulement.

2. Dispositif de mesure de forces à l'aide d'un montage (8) à roulement(s) capable d'absorber des forces radiales et des forces axiales, et dont les bagues extérieures ou les bagues intérieures, ou les deux, sont pourvues de jauges d'allongement (4) placées en différents points de mesure (24, 26 ; 25, 27) et servant à détecter les allongements au passage des éléments de roulement, les points de mesure (24, 26 ;

25, 27) étant disposés à des endroits des bagues extérieures ou des bagues intérieures, ou des deux, où les allongements au passage des éléments de roulement, qu'il faut détecter, varient de façon différente quand le montage (8) à roulement(s) est en charge, et avec un circuit d'interprétation (24-41) qui saisit, amplifie et redresse individuellement les variations de résistance des jauges d'allongement (4) résultant des différences d'allongement au passage des éléments de roulement et qui donnent, par soustraction, à partir des signaux redressés obtenus à partir des différences de variation de résistance, des signaux proportionnels aux composantes de force mentionnées, caractérisé en ce que le dispositif (8) à roulement(s) possède deux rangées (9, 10) d'éléments de roulement, en ce qu'il y a quatre points de mesure (24, 26 ; 25, 27) qui se trouvent, par paires, l'un en face de l'autre, sur la première et sur la deuxième rangées (9 ou 10) d'éléments de roulement, et en ce que le circuit d'interprétation (24-41) possède, pour chaque composante de force, des dispositifs (36-41) soustrayant, de la somme des valeurs mesurées provenant des deux points de mesure qui sont chargés dans chaque cas considéré, la somme des valeurs mesurées provenant des deux points de mesure, déchargés, dans chaque cas considéré, de la composante à mesurer.

3. Dispositif selon la revendication 1, caractérisé en ce qu'il est pourvu d'un additionneur (21) pour une tension de correction ($U_s$) qui est ajoutée au signal redressé fourni par le point de mesure (1) le plus chargé.

4. Dispositif selon l'une des revendications 1 à 3, caractérisé en ce que tous les points de mesure (1, 2, 3 ou 24 à 27) et l'axe longitudinal (13) du roulement (8) se trouvent sensiblement dans le même plan.

5. Dispositif selon l'une des revendications 1 à 4, caractérisé en ce que la longueur (I) des réseaux des jauges d'allongement (4) placées aux points de mesure est au plus égale à la longueur des projections des éléments de roulement (11) sur le point de mesure.

6. Dispositif selon l'une des revendications 4 ou 5, caractérisé en ce que, outre les trois ou quatre points de mesure (24-27) qui se trouvent dans un plan, il y a deux autres points de mesure (47, 48) qui se font face dans un plan perpendiculaire aux autres plans de mesure et qui correspondent à la première rangée d'éléments de roulement.

7. Dispositif selon la revendication 6, caractérisé en ce que le dispositif à roulement(s) (8) est constitué soit par un roulement à deux rangées, soit par deux roulements à une seule rangée montés l'un derrière l'autre, et en ce que quatre points de mesure (24, 26, 47, 48) correspondent à la rangée avant d'éléments de roulement du roulement à deux rangées ou, dans le cas où il y a deux roulements montés derrière l'autre, au roulement avant.

0 018 936

Fig. 1

Fig. 2

Fig. 3

1

Fig. 4

Fig. 5

Fig. 6

Fig. 7

Fig. 8